## Europäisches Patentamt
## European Patent Office
## Office européen des brevets

(19)

(11) Numéro de publication: **0 140 738**
**B1**

(12)
# FASCICULE DE BREVET EUROPEEN

(45) Date de publication du fascicule du brevet:
**07.01.87**

(51) Int. Cl.⁴: **B 64 G 1/44**, G 05 D 13/30

(21) Numéro de dépôt: **84401806.9**

(22) Date de dépôt: **12.09.84**

(54) **Procédé et dispositif pour réguler le mouvement d'un organe par mise en oeuvre d'un écoulement fluide.**

(30) Priorité: **13.10.83 FR 8316292**

(43) Date de publication de la demande:
**08.05.85 Bulletin 85/19**

(45) Mention de la délivrance du brevet:
**07.01.87 Bulletin 87/2**

(84) Etats contractants désignés:
**AT BE DE GB IT NL SE**

(56) Documents cités:
**FR - A - 598 128**
**US - A - 3 002 741**
**US - A - 3 563 307**

(73) Titulaire: **AEROSPATIALE Société Nationale Industrielle, 37 boulevard de Montmorency, F-75781 Paris Cédex 16 (FR)**

(72) Inventeur: **Luciano, Gérard, 62 avenue du Général Leclerc, F-67000 St. Laurent-du-Var (FR)**
Inventeur: **Croiset, Pierre, Mas Sainte-Thérèse 205 Bld des Roses, F-06210 Mandelieu (FR)**
Inventeur: **Poveda, Pierre, 29 rue de Koeningstein, F-06110 Le Cannet Rocheville (FR)**

(74) Mandataire: **Bonnetat, Christian et al, Cabinet PROPI Conseils 23 rue de Léningrad, F-75008 Paris (FR)**

## Description

La présente invention concerne un procédé et un dispositif pour réguler à chaque instant la vitesse d'un organe mobile se déplaçant suivant une course de sens uniforme déterminé, par la mise en œuvre d'un fluide passant sous pression à travers un orifice de section restreinte. Cette invention, quoique non exclusivement, s'applique tout particulièrement au contrôle du déploiement d'appendices montés sur des véhicules spatiaux (panneaux solaires, antennes, etc.) et elle sera décrite ci-après plus particulièrement en rapport avec cette application.

On sait que, notamment pour des raisons de dimensionnement de structure, on est amené à limiter au moins en fin de course la vitesse du déploiement des appendices montés sur des véhicules spatiaux, de façon que l'énergie à absorber au moment du choc de fin de course soit aussi faible que possible. De préférence, on tente de réguler de façon continue la vitesse desdits appendices pendant toute la durée du déploiement de ceux-ci, afin justement d'éviter le choc de fin de course.

On connaît déjà, par exemple par le document DE-C-1 154 547 ou par le brevet US-A-3 563 307, un dispositif de régulation comportant deux soufflets en communication par un orifice de section restreinte, de façon qu'un fluide contenu dans le premier d'entre eux passe dans le second lorsqu'un organe mobile lié rigidement au premier soufflet comprime celui-ci. Ainsi, la résistance opposée par ledit orifice au passage du fluide permet de réguler la vitesse de déplacement dudit organe mobile. A la fin de sa course de déploiement, ledit organe mobile du brevet US-A-3 563 307 peut éventuellement être ramené en position initiale par l'action de moyens extérieurs et un clapet, monté en parallèle sur ledit orifice, est prévu pour ramener rapidement le fluide (huile) du second soufflet dans le premier en court-circuitant ledit orifice.

Un tel dispositif connu est efficace, mais il présente l'inconvénient d'être d'utilisation restreinte et de ne pouvoir absorber qu'une énergie limitée. En effet, puisque l'organe mobile est lié rigidement audit premier soufflet, la course de compression de celui-ci est égale à la course dudit organe mobile. Il en résulte qu'à moins de prévoir des soufflets de grande longueur, ce qui entraînerait des difficultés de réalisation technique et les inconvénients d'un grand encombrement, l'utilisation de ce dispositif connu doit être limitée à des organes mobiles dont la course est faible. Par ailleurs, l'énergie absorbée par le premier soufflet est une fonction de la course de compression de celui-ci et de la raideur du système liquide-orifice. Pour pouvoir augmenter cette énergie absorbée, il est donc nécessaire d'augmenter ladite course et/ou ladite raideur. Comme mentionné ci-dessus, les possibilités d'augmentation de la course de compression du premier soufflet sont restreintes, de sorte que l'on pourrait être tenté d'augmenter la raideur du système liquide-orifice, par exemple en augmentant la viscosité du liquide ou en réduisant la section de passage dudit orifice. Il en résulterait alors une augmentation de pression du liquide à l'intérieur du premier soufflet, de sorte que celui-ci devrait être épais et résistant. Sa raideur propre serait alors augmentée et elle interviendrait dans la loi d'amortissement du mouvement de l'organe mobile en compliquant grandement l'adaptation d'impédance entre le dispositif de régulation et l'organe mobile.

La présente invention a pour objet de remédier à ces inconvénients et de permettre, par la mise en œuvre du passage d'un fluide à travers un orifice, de réguler la vitesse d'un organe mobile, même dans le cas où la course et/ou l'énergie dudit organe mobile sont grandes.

A cette fin, selon l'invention, le procédé pour réguler à chaque instant la vitesse d'un organe mobile se déplaçant suivant une course de sens uniforme déterminé, par la mise en œuvre d'un fluide passant sous pression à travers un orifice de section restreinte, est remarquable en ce que, pendant ladite course de sens uniforme, on fait alternativement passer une pluralité de fois ledit fluide sous pression dans un sens et dans l'autre à travers ledit orifice.

Ainsi, grâce à l'invention, tout se passe comme si on multipliait la course du premier soufflet du dispositif antérieur de sorte que l'on peut réguler le mouvement d'un organe mobile quelles que soient sa course et l'énergie à dissiper.

Pour mettre en œuvre le procédé, on prévoit un dispositif destiné à réguler à chaque instant la vitesse d'un organe mobile se déplaçant suivant une course de sens uniforme déterminé, par la mise en œuvre d'un fluide passant sous pression à travers un orifice de section restreinte, remarquable en ce qu'il comporte des moyens pour faire alternativement passer sous pression, une pluralité de fois, pendant ladite course de sens uniforme déterminé dudit organe mobile, ledit fluide dans un sens et dans l'autre à travers ledit orifice.

De préférence, lesdits moyens sont commandés par ledit organe mobile.

Dans un premier mode de réalisation, mettant en œuvre un ensemble connu de deux soufflets alignés, remplis d'un fluide incompressible coaxiaux et accolés par une cloison commune dans laquelle est pratiqué ledit orifice de section restreinte, lesdits soufflets pouvant être comprimés parallèlement à leur axe commun, ledit organe mobile comporte une poulie qui est coaxiale auxdits soufflets et sur laquelle est enroulé un câble et les extrémités des soufflets opposées à ladite cloison commune sont alternativement comprimées par des cames au cours de la rotation de la poulie.

La cloison commune et les soufflets peuvent être solidaires en rotation de ladite poulie, tandis que lesdites cames sont fixes. En variante, la cloison commune et les soufflets sont fixes, tandis que lesdites cames sont solidaires en rotation de ladite poulie.

Selon un second mode de réalisation, on prévoit une pluralité d'ensembles comportant chacun deux soufflets alignés, remplis d'un fluide incompressible, coaxiaux et accolés par une cloison commune dans laquelle est pratiqué un orifice de section restreinte, lesdits soufflets d'un ensemble pouvant être comprimés parallèlement à leur axe commun, et le dispositif est remarquable en ce que ledit organe mobile comporte une poulie solidaire en rotation d'un arbre pourvu d'une manivelle, en ce qu'une pluralité d'ensembles de soufflets sont répartis autour de l'axe commun à ladite poulie et audit arbre, en ce que la cloison commune de chaque ensemble est tourillonnée sur un bâti fixe parallèlement audit axe commun et en ce qu'une extrémité d'un des soufflets de chaque ensemble est reliée à ladite manivelle par une bielle.

Dans les différents modes de réalisation ci-dessus, il est avantageux que les deux soufflets d'un ensemble soient identiques et que les mouvements alternatifs de compression des deux soufflets soient d'amplitudes égales, quoique de sens opposés.

Avantageusement, une liaison est prévue entre lesdites extrémités des soufflets opposées à la paroi commune pour maintenir constant le volume global des deux soufflets. Cette mesure évite que la pression à l'intérieur d'un soufflet puisse éventuellement devenir proche du vide.

De façon connue, le fluide contenu dans les soufflets est incompressible et peut être constitué par une huile ou analogue. Dans le cas où le dispositif est amené à fonctionner dans une ambiance dont les variations de températures sont importantes, comme c'est par exemple le cas dans l'espace suivant que le dispositif est dirigé vers le soleil ou au contraire caché du soleil, on peut prévoir des écrans d'isolation et des dispositifs de réchauffage, et/ou utiliser des fluides, tels que le mercure, dont la viscosité varie peu avec la température, afin que les conditions de fonctionnement du dispositif soient maintenues aussi constantes que possible.

Dans le cas où les variations de température appliquées au dispositif seraient suffisamment importantes pour entraîner une dilatation importante du fluide des soufflets et où une liaison serait prévue entre les fonds desdits soufflets, de la façon indiquée ci-dessus, il serait indispensable de rendre cette liaison élastique, de façon qu'elle présente une force élastique au moins légèrement supérieure à la force d'actionnement des soufflets, de manière que la pression du soufflet tiré ne soit pas nulle.

Les figures du dessin annexé feront bien comprendre comment l'invention peut être réalisée.

La figure 1 est une vue schématique en coupe longitudinale d'un premier mode de réalisation du dispositif selon l'invention.

La figure 2 montre, en perspective, une variante de réalisation du dispositif selon l'invention.

La figure 3 est une coupe longitudinale partielle du dispositif de la figure 2.

Les figures 4 et 5 illustrent, respectivement selon des vues en élévation et en coupe partielles et schématiques, une autre variante de réalisation du dispositif selon l'invention.

Les figures 6, 7 et 8 illustrent schématiquement des liaisons élastiques prévues entre les fonds des soufflets et susceptibles d'absorber d'éventuelles dilatations.

Sur ces figures, des références identiques désignent des éléments semblables.

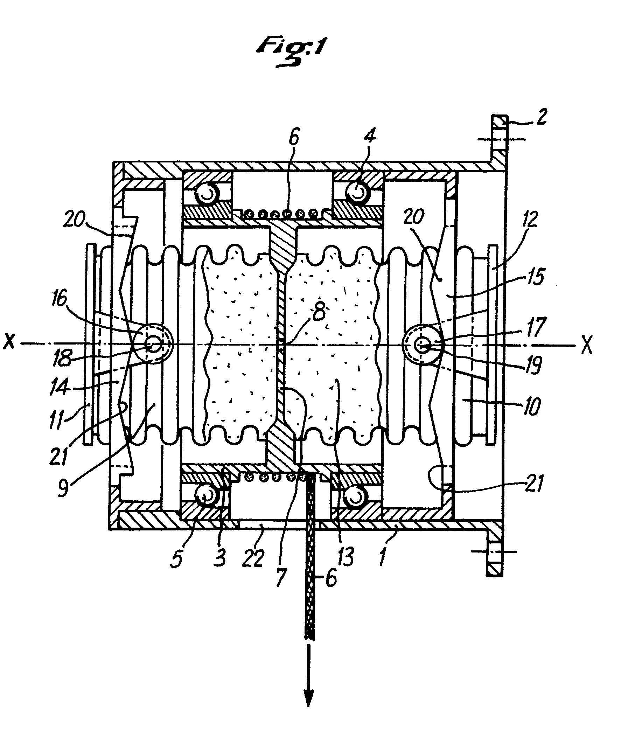

Le dispositif selon l'invention, montré par la figure 1, comporte un support tubulaire ou boîtier 1 pourvu d'une bride de fixation 2.

A l'intérieur du boîtier 1 est disposé un manchon 3 faisant office de poulie et monté rotatif, autour d'un axe X-X, par rapport à la paroi interne dudit boîtier, grâce à des roulements 4 et 5 à contact oblique. Sur la poulie 3 est enroulé un câble 6, susceptible de commander le mouvement d'un appendice monté sur un vaisseau spatial (non représenté). La poulie 3 est creuse et elle comporte une cloison ou paroi de partition intérieure 7, qui en est solidaire et qui est orthogonale à l'axe de rotation X-X. La paroi 7 est percée d'un trou traversant 8, de section restreinte.

Des soufflets identiques 9 et 10, par exemple métalliques, sont logés à l'intérieur de la poulie 3 et du boîtier 1 et comportent une extrémité ouverte dont le bord est solidarisé de la paroi 7 en entourant le trou 8, les soufflets 9 et 10 étant disposés de part et d'autre de ladite paroi 7. Les soufflets 9 et 10 présentent une forme au moins approximative de révolution et leurs axes sont confondus avec l'axe X-X. La poulie 3, la paroi 7 et les soufflets 9 et 10 forment un ensemble solidaire et cet ensemble est rigide en rotation autour dudit axe X-X.

Les soufflets 9 et 10 sont obturés, à leurs extrémités opposées à la paroi 7, respectivement par des fonds 11 et 12 et sont remplis d'un liquide 13. Ils sont compressibles et expansibles suivant la direction de l'axe X-X. On conçoit que le liquide 13 passe d'un soufflet à l'autre, à travers le trou 8 de la paroi 7, en fonction de l'état de compression relatif des soufflets 9 et 10 l'un par rapport à l'autre.

Du côté des fonds 11 et 12 des soufflets 9 et 10, sont disposées des cames annulaires, portant respectivement les références 14 et 15. Les cames 14 et 15 sont coaxiales à l'axe X-X et solidaires du boîtier 1. Un ensemble de galets 16 et un ensemble de galets 17, régulièrement répartis autour de l'axe X-X et montés rotatifs respectivement autour d'axes 18 ou 19 solidaires desdits fonds 11 et 12, sont susceptibles de rouler sur les cames 14 et 15. Les galets 16 et les galets 17 sont pressés élastiquement contre les cames respectives 14 et 15 par les soufflets 9 et 10 et le profil desdites cames montre une alternance de saillies 20 et de dépressions 21.

L'ensemble des éléments 9, 10, 11, 12 est parfaitement symétrique par rapport à la paroi 7. Cependant, l'agencement des galets 16 et de la came 14, d'une part, et l'agencement des galets 17 et de la came 15, d'autre part, sont disposés de façon que, lorsque les galets 16 sont en appui sur une saillie 20 de la came 14, les galets 17 sont en appui dans une dépression 21 de la came 15 et vice versa.

Ainsi, lorsque le câble 6, qui passe à travers le boîtier 1 par une ouverture 22, se déroule sous l'action de moyens extérieurs non représentés, il entraîne en rotation autour de l'axe X-X la poulie 3, la paroi 7, les soufflets 9 et 10 et les galets 16 et 17, de façon que, à cause de la coopération desdits galets avec leur came 14 ou 15 respective, lesdits soufflets 9 et 10 sont alternativement comprimés plusieurs fois par tour, c'est-à-dire que le sens de passage du fluide 13 à travers le trou 8 est changé plusieurs fois par tour de l'équipage rotatif 3, 7, 9, 10, 16 et 17.

Les cames 14 et 15 et les galets 16 et 17 forment, en coopération avec le boîtier 1, une liaison rigide imposant à l'ensemble des soufflets 9 et 10 une longueur totale invariable. Le volume global des deux soufflets 9 et 10 ne varie donc pas, seuls les volumes de fluide 13 de part et d'autre de la paroi 7 variant cycliquement et alternativement lors de la rotation de l'équipage 3, 7, 9, 10, 16 et 17 autour de l'axe X-X. Le mouvement alternatif de liquide 13 à travers le trou 8 permet la régulation du mouvement de translation des soufflets 9 et 10 parallèlement à l'axe X-X, donc le contrôle de la rotation desdits soufflets autour de l'axe X-X et, en conséquence, le défilement du câble 6.

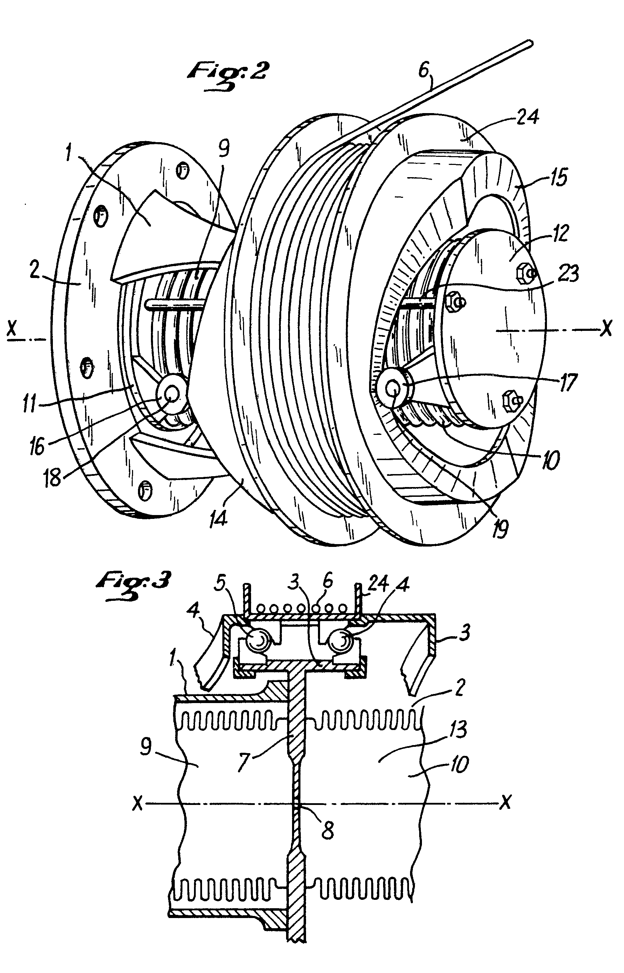

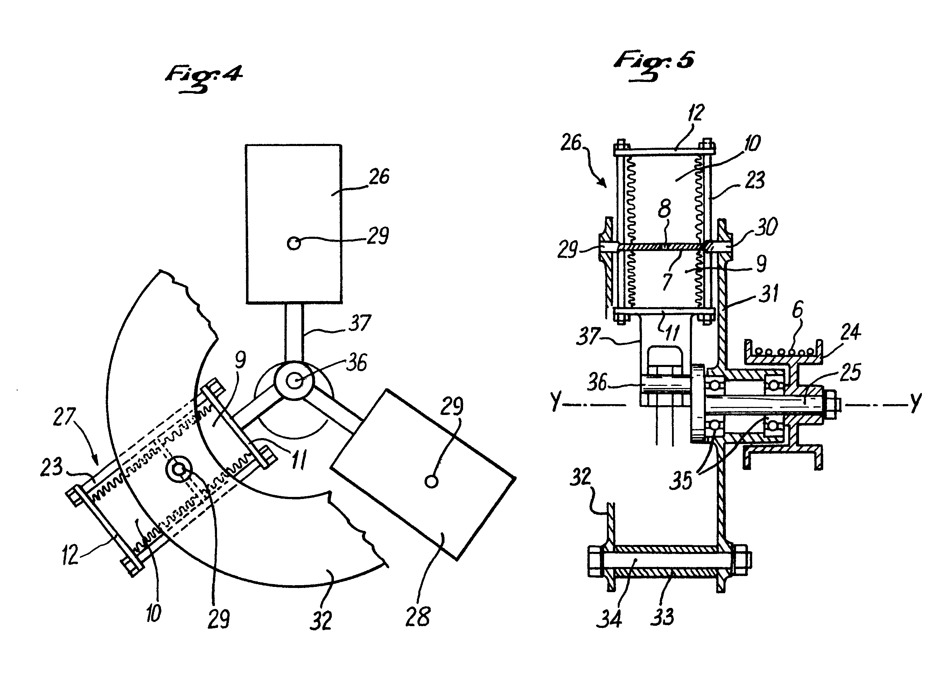

Le dispositif selon l'invention, illustré par les figures 2 et 3, est proche de celui de la figure 1. Cependant, au lieu de comporter comme le dispositif de cette figure 1, d'une part, un ensemble de soufflets rotatif et, d'autre part, des cames fixes, il comporte des cames rotatives et un ensemble de soufflets fixe.

Dans ce dispositif des figures 2 et 3, on retrouve le support tubulaire 1 pourvu de sa bride de fixation 2. Le manchon 3 et la paroi 7 sont rendus solidaires du support 1. Les soufflets 9 et 10 équipés de leurs fonds 11 et 12 et de leurs galets 16 et 17, sont rendus solidaires de la paroi 7, percée du trou 8. Des tiges d'entretoises 23, disposées entre les fonds 11 et 12, assurent une longueur constante à l'ensemble des deux soufflets 9 et 10. Ainsi, l'ensemble 3, 7, 9, 10, 16, 17 et 23 est fixe.

Par ailleurs, sur le manchon 3 sont montés des roulements à contact oblique 4 et 5, qui permettent la rotation d'une poulie 24 autour de l'axe X-X et par rapport audit ensemble. Sur ladite poulie 24 est enroulé le câble d'actionnement 6. Les cames 14 et 15 sont solidaires des flancs de la poulie 24 et coopèrent avec les galets 16 et 17, respectivement.

On voit aisément que lorsque la poulie 24 et les cames 14 et 15 tournent autour de l'axe X-X, on obtient une compression cyclique et alternative des soufflets 9 et 10, de la façon indiquée ci-dessus, de sorte qu'il en résulte des variations du sens de passage du fluide 13 à travers le trou 8 et l'effet de régulation conséquent.

Dans le mode de réalisation montré par les figures 4 et 5, on prévoit une pluralité d'ensembles à soufflets régulièrement répartis autour de l'axe Y-Y d'un arbre 25. Par exemple, on prévoit trois ensembles 26, 27 et 28 répartis à 120° autour dudit axe Y-Y. Chacun de ces ensembles 26, 27 ou 28 comporte une paroi de séparation 7 percée d'un trou 8, des soufflets 9 et 10, des fonds 11 et 12 et des tiges 23 d'entretoise de conjugaison de fonds 11 et 12, comme cela est montré sur la figure 2.

La paroi de séparation 7 de chaque ensemble 26, 27 et 28 est pourvue de tourillons opposés 29 et 30, tournant l'un dans un bâti 31, l'autre dans une couronne 32 qui en est rendue solidaire par l'intermédiaire de colonnettes 33 et de tirants 34.

L'arbre 25 est monté dans le bâti 31 par l'intermédiaire de roulements 35. Il porte une manivelle 36 à l'une de ses extrémités et est solidaire en rotation de la poulie 24 sur laquelle est enroulé le câble d'actionnement 6.

La ligne des tourillons 29, 30 de chaque ensemble 26, 27, 28 est parallèle à l'axe Y-Y de l'arbre 25 de la poulie 24 et la manivelle 36 porte des bielles 37, chacune solidaire du fond 11 d'un desdits ensembles 26 à 28.

Ainsi, lorsque le câble 6 se déroule en entraînant en rotation autour de l'axe Y-Y, la poulie 24, l'arbre 25 et la manivelle 36, les bielles 37 provoquent alternativement la compression des soufflets 9 et 10 de chaque ensemble 26, 27 et 28. On obtient donc le passage alternatif de fluide 13 à travers le trou 8 des parois 7 respectives et l'effet de régulation recherché. Cet effet de régulation présente une grande régularité, du fait de la pluralité des ensembles 26 à 28, régulièrement répartis autour de l'axe Y-Y, fournissant chacun des amortissements déphasés, mais se chevauchant.

Comme mentionné ci-dessus, dans le cas où le dispositif selon l'invention serait amené à fonctionner dans un environnement à variations de température importantes, il peut être nécessaire de prévoir un élément élastique dans la liaison mécanique prévue entre les fonds 11 et 12 des soufflets 9 et 10 d'un ensemble.

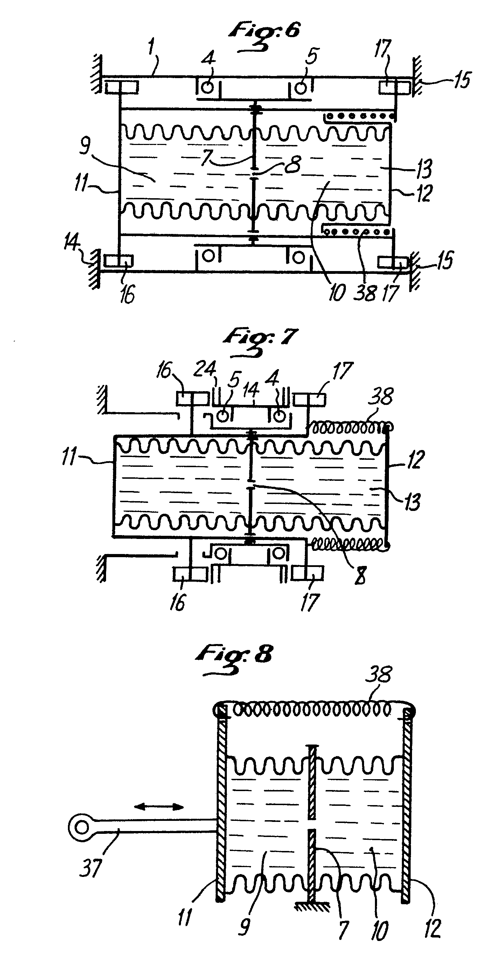

La figure 6 montre schématiquement un exemple d'une telle liaison élastique par exemple appropriée au dispositif de la figure 1. On peut y voir qu'un ressort de compression 38 est intercalé entre le fond 12 et les galets 17. Dans l'exemple de réalisation schématique de la figure 7, plus particulièrement destiné au dispositif des figures 2 et 3, un ressort de traction 38 est intercalé entre le fond 12 et les galets 17. Enfin, dans l'exemple de réalisation schématique de la figure 8, plus particulièrement destiné au dispositif des figures 4 et 5, un ou plusieurs ressorts de traction 38 sont prévus entre les fonds 11 et 12. Dans les exemples des figures 7 et 8, les ressorts 38 remplacent les tiges 23.

Bien entendu, il est nécessaire que la force élastique exercée par les ressorts 38 soit supérieure à la force d'actionnement des soufflets, pour que le fonctionnement du dispositif soit correct.

## Revendications

1. Procédé pour réguler à chaque instant la vitesse d'un organe mobile (3, 6) se déplaçant suivant une course de sens uniforme déterminé, par la mise en œuvre d'un fluide passant sous pression à travers un orifice (8) de section restreinte, caractérisé en ce que, pendant ladite course de sens uniforme déterminé, on fait alternativement passer une pluralité de fois ledit fluide sous pression dans un sens et dans l'autre à travers ledit orifice (8).

2. Dispositif pour réguler à chaque instant la vitesse d'un organe mobile (3, 6) se déplaçant suivant une course de sens uniforme déterminé, par la mise en œuvre d'un fluide passant sous pression à travers un orifice (8) de section restreinte, caractérisé en ce qu'il comporte des moyens (14, 15, 16, 17) pour faire alternativement passer, une pluralité de fois pendant ladite course de sens uniforme déterminé dudit organe mobile, ledit fluide sous pression dans un sens et dans l'autre à travers ledit orifice (8).

3. Dispositif selon la revendication 2, caractérisé en ce que lesdits moyens (14, 15, 16, 17) sont commandés par ledit organe mobile (3, 6).

4. Dispositif selon la revendication 3, comportant un ensemble aligné de deux soufflets (9, 10) remplis d'un fluide incompressible, coaxiaux et accolés par une cloison commune (7) dans laquelle est pratiqué ledit orifice (8) de section restreinte, lesdits soufflets pouvant être comprimés parallèlement à leur axe commun, caractérisé en ce que ledit organe mobile comporte une poulie (3, 24) qui est coaxiale auxdits soufflets et sur laquelle est enroulé un câble (6), et en ce que les extrémités (11, 12) des soufflets (9 et 10) opposées à ladite cloison commune (7) sont alternativement comprimées par des cames (14, 15) au cours de la rotation de la poulie (6).

5. Dispositif selon la revendication 4, caractérisé en ce que la cloison commune (7) et les soufflets (9, 10) sont solidaires en rotation de ladite poulie (3), tandis que lesdites cames (14, 15) sont fixes.

6. Dispositif selon la revendication 4, caractérisé en ce que la cloison commune (7) et les soufflets (9, 10) sont fixes, tandis que lesdites cames (14, 15) sont solidaires en rotation de ladite poulie (24).

7. Dispositif selon la revendication 3, comportant une pluralité d'ensembles comportant chacun deux soufflets (9, 10) alignés, remplis d'un fluide incompressible, coaxiaux et accolés par une cloison commune (7) dans laquelle est pratiqué un orifice de section restreinte, lesdits soufflets d'un ensemble pouvant être comprimés parallèlement à leur axe commun, caractérisé en ce que ledit organe mobile comporte une poulie (24) solidaire en rotation d'un arbre (25) pourvu d'une manivelle (36), en ce qu'une pluralité (26, 27, 28) d'ensembles de soufflets (9, 10) sont répartis autour de l'axe commun Y-Y à ladite poulie (24) et audit arbre (25), en ce que la cloison commune (7) de chaque ensemble (26, 27 et 28) est tourillonnée sur un bâti fixe (31) parallèlement audit axe commun Y-Y et en ce qu'une extrémité (11) d'un des soufflets de chaque ensemble (26, 27, 28) est relié à ladite manivelle (36) par une bielle (37).

8. Dispositif selon l'une quelconque des revendications 4 à 7, caractérisé en ce que les deux soufflets (9, 10) d'un ensemble sont identiques et les mouvements alternatifs de compression des deux soufflets sont d'amplitudes égales, quoique de sens opposés.

9. Dispositif selon l'une quelconque des revendications 4 à 8, caractérisé en ce qu'une liaison est prévue entre lesdites extrémités (11, 12) des soufflets (9, 10) opposées à la paroi commune (7) pour maintenir constant le volume global des deux soufflets.

10. Dispositif selon la revendication 9, caractérisé en ce que ladite liaison est élastique pour permettre la dilatation du fluide contenu dans les soufflets et exerce une force élastique au moins légèrement supérieure à la force d'actionnement des soufflets, de manière que la pression du soufflet tiré ne soit pas nulle.

**Patentansprüche**

1. Verfahren zum jederzeitigen Regeln eines beweglichen Organs (3, 6), das in bestimmter gleichförmiger Richtung auf einer Bahn verschoben wird, durch den Einsatz eines Strömungsmittels, das unter Druck durch eine Öffnung (8) von vermindertem Querschnitt hindurchgeführt wird, dadurch gekennzeichnet, dass während des in bestimmter gleichförmiger Richtung stattfindenden Verlaufs das Strömungsmittel unter Druck mehrmals abwechselnd in der einen und in der anderen Richtung durch die Öffnung (8) geführt wird.

2. Vorrichtung zum jederzeitigen Regeln eines beweglichen Organs (3, 6), das in bestimmter gleichförmiger Richtung auf einer Bahn verschoben wird, durch den Einsatz eines Strömungsmittels, das unter Druck durch eine Öffnung (8) von vermindertem Querschnitt hindurchgeführt wird, dadurch gekennzeichnet, dass sie Mittel (14, 15, 16, 17) aufweist, durch die während des in bestimmter gleichförmiger Richtung stattfindenden Verlaufs des beweglichen Organs das Strömungsmittel unter Druck abwechselnd in der einen und in der anderen Richtung durch die Öffnung (8) geführt wird.

3. Vorrichtung nach Anspruch 2, dadurch gekennzeichnet, dass die Mittel (14, 15, 16, 17) vom beweglichen Organ (3, 6) gesteuert werden.

4. Vorrichtung nach Anspruch 3 bestehend aus einer ausgerichteten Einheit aus zwei Bälgen (9, 10), die mit einer nicht zusammendrückbaren Flüssigkeit gefüllt sind, koaxial zueinander liegen und eine gemeinsame Trennwand (7) aufweisen, in der eine Öffnung (8) von vermindertem Querschnitt eingelassen ist, und die parallel zu ihrer gemeinsamen Achse zusammendrückbar sind, dadurch gekennzeichnet, dass das bewegliche Organ eine Rolle (3, 24) aufweist, die mit den Bälgen koaxial liegt und auf der ein Kabel (6) aufgewickelt ist, und dass die der gemeinsamen Trennwand (7) gegenüberliegenden Enden (1, 12) der Bälge (9 und 10) im Laufe der Umdrehung der Rolle (3, 24) durch die Nocken (14, 15) abwechselnd zusammengedrückt wird.

5. Vorrichtung nach Anspruch 4, dadurch gekennzeichnet, dass die Trennwand 7 und die Bälge (9, 10) mit der Rolle (3) drehfest verbunden sind, während die Nocken (14, 15) ortsfest angeordnet sind.

6. Vorrichtung nach Anspruch 4, dadurch gekennzeichnet, dass die Trennwand (7) und die Bälge (9, 10) ortsfest angeordnet sind, während die Nocken (14, 15) mit der Rolle (24) drehfest verbunden sind.

7. Vorrichtung nach Anspruch 3 bestehend aus mehreren Einheiten mit jeweils zwei Bälgen (9, 10), die ausgerichtet, mit einem nicht zusammendrückbaren Strömungsmittel angefüllt und koaxial angeordnet sind sowie eine gemeinsame Trennwand (7) aufweisen, in die eine Öffnung von vermindertem Querschnitt eingelassen ist, wobei die Bälge einer Einheit parallel zu ihrer gemeinsamen Achse zusammendrückbar sind, dadurch gekennzeichnet, dass das bewegliche Organ eine Rolle (24) aufweist, die an einer mit einer Kurbel (36) versehenen Welle (25) drehfest liegt, dass mehrere Balgeinheiten (26, 27, 28) um eine mit der Rolle (24) und mit der Welle (25) gemeinsame Achse Y-Y verteilt angeordnet liegen, dass die gemeinsame Trennwand (7) jeder Einheit (26, 27, 28) an einem ortsfesten Gestell (31) parallel zur gemeinsamen Achse Y-Y drehbar angeordnet ist und dass ein Ende (11) eines der Bälge jeder Einheit (26, 27, 28) durch ein Zwischenglied (37) mit der Kurbel (36) verbunden ist.

8. Vorrichtung nach einem der Ansprüche 4 bis 7, dadurch gekennzeichnet, dass die beiden Bälge (9, 10) einer Einheit baugleich ausgebildet sind und die wechselnden Kompressionsbewegungen beider Bälge die gleiche, jedoch entgegengesetzt gerichtete Amplitude haben.

9. Vorrichtung nach einem der vorhergehenden Ansprüche 4 bis 8, dadurch gekennzeichnet, dass eine Verbindung zwischen den der gemeinsamen Trennwand (7) gegenüberliegenden Enden (11, 12) der Bälge (9, 10) vorgesehen ist, um das gemeinsame Volume beider Bälge konstant zu halten.

10. Vorrichtung nach Anspruch 9, dadurch gekennzeichnet, dass die Verbindung elastisch ist, so dass sich das in den Bälgen enthaltene Strömungsmittel ausdehnen und eine Federkraft ausüben kann, die zumindest geringfügig grösser ist als die Stellkraft der Bälge, so dass der Druck des gezogenen Balgs nicht gleich Null ist.

## Claims

1. Process for regulating at any instant the speed of a mobile member (3, 6) moving in a stroke of determined uniform direction, by employing a fluid passing under pressure through an orifice (8) of restricted section, characterized in that said pressurized fluid is passed several times alternately in one direction and in the other through said orifice (8), during said stroke of determined uniform direction.

2. Device for regulating at any instant the speed of a mobile member (3, 6) moving in a stroke of determined uniform direction, by employing a fluid passing under pressure through an orifice (8) of restricted section, characterized in that it comprises means (14, 15, 16, 17) for causing said fluid to be passed under pressure alternately several times in one direction and in the other through said orifice (8), during said stroke of determined uniform direction of said mobile member.

3. Device according to claim 2, characterized in that said means (14, 15, 16, 17) are controlled by said mobile member (3, 6).

4. Device according to claim 3, comprising an aligned assembly of two bellows (9, 10) filled with an incompressible fluid, coaxial and joined by a common partition (7) in which said orifice (8) of restricted section is made, said bellows being adapted to be compressed parallel to their common axis, characterized in that said mobile member comprises a pulley (3, 24) which is coaxial to said bellows and on which a cable (6) is wound, and in that the ends (11, 12) of the bellows (9 and 10) opposite said common partition (7) are alternately compressed by cams (14, 15) in the course of rotation of the pulley.

5. Device according to claim 4, characterized in that the common partition (7) and the bellows (9, 10) rotate with said pulley (3), whilst said cams (14, 15) are fixed.

6. Device according to claim 4, characterized in that the common partition (7) and the bellows (9, 10) are fixed, whilst said cams (14, 15) rotate with said pulley (24).

7. Device according to claim 3, comprising a plurality of assemblies, each comprising two aligned bellows (9, 10), filled with an incompressible fluid, coaxial and joined by a common partition (7) in which an orifice of restricted section is made, said bellows of an assembly being adapted to be compressed parallel to their common axis, characterized in that said mobile member comprises a pulley (24) rotating with a shaft (25) provided with a crank (36); in that a plurality of bellows assemblies (26, 27, 28) are distributed about the axis (Y-Y) common to said pulley (24) and to said shaft (25); in that the common partition (7) of each assembly (26, 27, 28) is journalled on a fixed frame (31) parallel to said common axis (Y-Y) and in that one end (11) of one of the bellows of each assembly (26, 27, 28) is connected to said crank (36) by a connecting rod (37).

8. Device according to any one of claims 4 to 7, characterized in that the two bellows (9, 10) of an assembly are identical and the alternative movements of compression of the two bellows are of equal amplitudes, although of opposite directions.

9. Device according to any one of claims 4 to 8, characterized in that a connection is provided between said ends (11, 12) of the bellows (9, 10) opposite the common wall (7) in order to maintain the overall volume of the two bellows constant.

10. Device according to claim 9, characterized in that said connection is elastic in order to allow expansion of the fluid contained in the bellows and exerts an elastic force at least slightly greater than the force of actuation of the bellows, so that the pressure of the drawn bellow is not zero.

Fig.1

Fig. 2

Fig. 3

**Fig.5**

**Fig.4**

## Fig: 6

## Fig: 7

## Fig: 8